# EUROPEAN PATENT APPLICATION

(11) **EP 2 492 993 A1**
(43) Date of publication of application: **29.08.2012**
(21) Application number: 10824608.3
(22) Date of filing: 28.09.2010
(51) Int. Cl.: H01M 4/06, H01M 4/58, H01M 4/62, H01M 4/74

(54) **LITHIUM PRIMARY BATTERY**

(30) Priority: 20.10.2009 JP 2009241050
(71) Applicant: Panasonic Corporation, Kadoma-shi Osaka 571-8501 (JP)
(72) Inventor: KATO, Fumio, Shiromi 2-chome, Chuo-ku, Osaka-shi Osaka 540-6207 (JP); NUNOME, Jun, Shiromi 2-chome, Chuo-ku, Osaka-shi Osaka 540-6207 (JP); FUKUHARA, Yoshiki, Shiromi 2-chome, Chuo-ku, Osaka-shi Osaka 540-6207 (JP); SHIMIZU, Toshiyuki, Shiromi 2-chome, Chuo-ku, Osaka-shi Osaka 540-6207 (JP)
(74) Representative: Grünecker, Kinkeldey, Stockmair & Schwanhäusser
(86) International application number: PCT/JP2010/005821
(87) International publication number: WO 2011/048753

(57) **Abstract**

A lithium primary battery including: a positive electrode 1 using iron disulfide as a positive electrode active material, wherein the positive electrode 1 includes a positive electrode mixture containing the positive electrode active material and a conductive agent, and a positive electrode core which is made of a porous metal member, and is filled with the positive electrode mixture, the iron disulfide has an average particle size of 20-50 µm, the conductive agent has a specific surface area of 300 m²/g or larger, and the iron disulfide and the conductive agent in the positive electrode mixture are mixed in a mass ratio of 97:3-93:7.

## Description

### TECHNICAL FIELD

The present invention relates to lithium primary batteries using iron disulfide as a positive electrode active material.

### BACKGROUND ART

In lithium primary batteries using iron disulfide as a positive electrode active material (hereinafter merely referred to as "lithium secondary batteries"), materials of positive and negative electrodes have very high theoretical capacities, e.g., about 894 mAh/g of iron disulfide as the positive electrode active material, and about 3863 mAh/g of lithium as a negative electrode active material. Such lithium primary batteries are practically useful as high-capacity, lightweight batteries. Also, the lithium primary batteries are valuable because they have an initial open circuit voltage (OCV) of 1.7-1.8 V, and an average discharge voltage of around 1.5 V, and are compatible with other 1.5 V grade primary batteries, e.g., manganese batteries, alkaline manganese dioxide batteries, silver oxide batteries, air batteries, etc.

A practically commercialized cylindrical lithium primary battery includes an electrode group formed by winding a positive electrode and a negative electrode with a separator interposed therebetween, and placed in a hollow cylindrical battery case. The cylindrical lithium primary battery has a larger contact area between the positive and negative electrodes as compared with the other 1.5 V grade primary batteries, and can provide a greater high rate discharge characteristic. Patent Document 1 describes a technology of pulverizing iron disulfide as the positive electrode active material into fine particles having an average particle size of 1-19 µm for higher reactivity to improve the high rate discharge characteristic.

It has been known that the OCV increases when the lithium battery is stored for a long time at high temperature. When the OCV increases to about 2 V, the compatibility with the other 1.5 V grade primary batteries is lost.

According to Patent Document 2, on the assumption that a cause of the increase in OCV is active species such as oxygen etc. adsorbed on a surface of the conductive agent, a specific surface area of a conductive agent in the positive electrode is reduced to 250 m²/g or smaller to reduce the effect of the active species, thereby reducing the increase in OCV.

### CITATION LIST

### PATENT DOCUMENTS

[Patent Document 1] Japanese Translation of PCT International Application No. 2008-525960
[Patent Document 2] Japanese Patent Publication No. 2006-100164

### SUMMARY OF THE INVENTION

### TECHNICAL PROBLEM

According to the technology of Patent Document 2, the specific surface area of the conductive agent is limited to be small. This reduces penetration of an electrolytic solution into a positive electrode, and the high rate discharge characteristic, which is an important characteristic of the lithium primary battery, is reduced.

In view of the foregoing, the present invention has been achieved. The present invention is concerned with providing a lithium primary battery which can keep the high rate discharge characteristic, and can reduce the increase in OCV through long term storage at high temperature.

### SOLUTION TO THE PROBLEM

In view of the above concern, the present invention provides a positive electrode including a positive electrode core made of a porous metal member, and a positive electrode mixture filling the positive electrode core. The positive electrode mixture contains roughly pulverized iron disulfide, and a conductive agent having a large specific surface area and is mixed in a high ratio.

Specifically, a first aspect of the present invention is directed to a lithium primary battery including: a positive electrode using iron disulfide as a positive electrode active material, wherein the positive electrode includes a positive electrode mixture containing the positive electrode active material and a conductive agent, and a positive electrode core which is made of a porous metal member, and is filled with the positive electrode mixture, the iron disulfide has an average particle size of 20-50 µm, the conductive agent has a specific surface area of 300 m²/g or larger, and the iron disulfide and the conductive agent in the positive electrode mixture are mixed in a mass ratio of 97:3-93:7.

In a preferred embodiment, the porous metal member has a pore size of 0.1-2.0 mm.

In a preferred embodiment, the average particle size of the iron disulfide is 30-40 µm, and a particle size of the iron disulfide at which a cumulative volume fraction of the iron disulfide reaches 10% is 10 µm or larger.

In a preferred embodiment, the specific surface area of the conductive agent is 1300 m²/g or smaller, and the conductive agent is preferably made of Ketchen black.

### ADVANTAGES OF THE INVENTION

The present invention can provide the lithium primary battery which can ensure the high rate discharge characteristic, and can reduce the increase in OCV through the long term storage at high temperature.

### BRIEF DESCRIPTION OF THE DRAWINGS

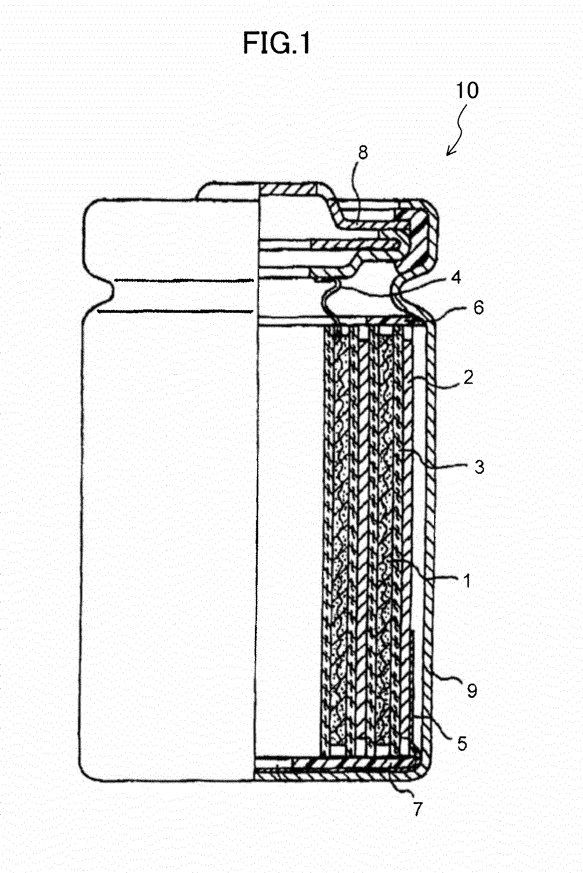

[FIG. 1] FIG. 1 is a half cross-sectional view of a lithium primary battery 10 according to an embodiment of the present invention.

### DESCRIPTION OF EMBODIMENTS

How the inventors of the present invention have achieved the present invention will be described below before describing the present invention.

The inventors of the present invention presumed that the increase in OCV through the long term storage at high temperature is ascribable to a high potential due to oxidation-reduction reaction (S/S²⁻) of a trace amount of sulfur (equilibrium potential: about 2.5 V) liberated from iron disulfide (equilibrium potential: about 1.8 V) as the positive electrode active material.

In this point of view, the inventors of the present invention presumed that the increase in OCV through the long term storage at high temperature could be reduced by alleviating the liberation of sulfur from iron disulfide. Specifically, they presumed that the increase in OCV could be reduced by reducing a surface area of iron disulfide, i.e., increasing a particle size of the iron disulfide (rough pulverization).

To confirm the presumption, AA lithium primary batteries were fabricated using different types of iron disulfide having different particle sizes as the positive electrode active materials, and the increase in OCV was measured in each of the lithium primary batteries. Each of the lithium primary batteries was fabricated in the following manner.

A positive electrode mixture was prepared by mixing iron disulfide and a conductive agent (acetylene black) in a ratio of 97 parts by mass: 3 parts by mass. The prepared mixture was applied to each surface of a positive electrode core made of aluminum foil, and the obtained product was dried and rolled to form a positive electrode. Different types of iron disulfide having average particle sizes of 15 µm and 35 µm, respectively, were used. In this specification, the "average particle size" designates a particle size at which a cumulative volume fraction of iron disulfide reaches 50% (D₅₀). The average particle size can be measured using a particle size distribution analyzer (e.g., Microtrac FRA manufactured by Nikkiso).

The fabricated positive electrode and a negative electrode made of lithium metal were wound with a separator (a microporous polyolefin film) to fabricate an electrode group. The electrode group was placed in a cylindrical battery case together with a nonaqueous electrolytic solution containing lithium iodide as an electrolyte. Thus, the lithium primary battery was fabricated.

Regarding Batteries 1 and 2 fabricated in the above-described manner (having the average particle sizes of 15 µm and 35 µm, respectively), the following three characteristics (1)-(3) of were measured. Batteries 1 and 2, 5 cells each, were used to measure the characteristics, and average values of the measurements were obtained. The lithium primary battery immediately after the assembly has an OCV higher than a practical voltage due to remaining active species, such as oxygen etc., absorbed in the conductive agent in the positive electrode. Thus, the assembled lithium primary battery was aged for 3 days in a 45°C atmosphere, and then pre-discharged by 5% of a theoretical capacity of the positive electrode (a capacity calculated on the assumption that discharge capacity of iron disulfide is 894 mAh/g).

### (1) Continuous Discharge Characteristic at 100 mA

Each of Batteries 1, 2 was discharged at a constant current of 100 mA in a 21°C atmosphere to measure time taken for a closed circuit voltage to reach 0.9 V. This measurement test corresponds to a low rate discharge test for measuring an absolute capacity of the battery.

### (2) DSC Pulse Discharge Characteristic

A single cycle of pulse discharge, i.e., discharging Batteries 1, 2 for 2 seconds at 1.5 W in a 21°C atmosphere, and discharging Batteries 1, 2 for 28 seconds at 0.65 W in a 21°C atmosphere, was performed 10 times per hour to measure time taken for the closed circuit voltage to reach 1.05 V. This measurement test is based on a discharge test specified by C 18.1 M of American National Standards Institute (ANSI), and represents actual use of the battery in digital still cameras (DSC).

### (3) Increase in OCV after Storage at 60°C

The OCV of each of Batteries 1, 2 was measured in a 21°C atmosphere, and then the batteries were stored for 2 months in a 60°C atmosphere. The stored batteries were cooled down, and the OCV was measured again in the 21°C atmosphere to calculate increase in voltage relative to the OCV before storage [V].

Table 1 shows the measured three characteristics of Batteries 1, 2. In Table 1, values of the continuous discharge characteristic at 100 mA and the DSC pulse discharge characteristic were indices relative to the measurements of Battery 1 (using iron disulfide having an average particle size (D₅₀) of 15 µm) regarded as 100 (reference).

**[Table 1]**

| | Positive electrode core | Average particle size of iron disulfide D₅₀ (µm) | Continuous discharge characteristic at 100 mA | DSC pulse discharge characteristic | Increase in OCV after storage at 60°C (V) |
|---|---|---|---|---|---|
| Battery 1 | Aluminum | 15 | 100 | 100 | 0.25 |
| Battery 2 | Aluminum | 35 | 100 | 89 | 0.04 |

Table 1 indicates that Battery 2 using the iron disulfide having an average particle size (D₅₀) of 35 µm reduced the increase in OCV after storage at 60°C as compared with Battery 1 using the iron disulfide having an average particle size (D₅₀) of 15 µm. The results suggest that the increase in OCV can be reduced by increasing the particle size of the iron disulfide (rough pulverization).

Table 1 also shows that the DSC pulse discharge characteristic of Battery 2 was lower than that of Battery 1. This is presumably because the increased particle size of the iron disulfide reduced reactivity. Battery 2 experienced falling of part of the positive electrode mixture applied to each surface of the positive electrode core made of aluminum foil. The increased particle size of the iron disulfide presumably reduced the frequency of contact among particles of the iron disulfide, thereby reducing strength of the positive electrode mixture layer.

Then, through a study of a method for reducing the decrease in DSC pulse discharge characteristic (high rate discharge characteristic), while reducing the increase in OCV through the long-term storage at high temperature, the inventors of the present invention have found the followings.

The decrease in DSC pulse discharge characteristic can be reduced by improving current collection. For this purpose, the inventors of the present invention have focused on the conductive agent contained in the positive electrode mixture. Increasing a specific surface area of the conductive agent allows improved penetration of the electrolytic solution, thereby improving the DSC pulse discharge characteristic. However, when the specific surface area of the conductive agent is increased too much, the conductive agent may excessively hold a dispersion medium used to form slurry, and the positive electrode mixture cannot be easily slurried. Thus, the positive electrode mixture cannot be applied to the aluminum foil.

Then, the inventors of the present invention have focused on the possibility of a porous metal member, such as expanded metal etc., as the positive electrode core. When the positive electrode core made of the porous metal member is filled with the positive electrode mixture, preparing the slurry is no longer necessary, and the conductive agent having a large specific surface area can be used. Thus, in the battery using such a conductive agent, improvement in DSC pulse discharge characteristic can be expected.

In the positive electrode prepared by filling the positive electrode core made of the porous metal member with the positive electrode mixture, a current collecting network in the positive electrode can be improved by increasing the ratio of the conductive agent relative to the iron disulfide in the positive electrode mixture. Thus, improvement in current collection can be expected.

With the positive electrode core made of the porous metal member filled with the positive electrode mixture, the positive electrode mixture can be well held in a three-dimensional skeleton of the core even when the particle size of the iron disulfide is increased. This can prevent the falling of the positive electrode mixture off the positive electrode core.

In view of the foregoing, the inventors of the present invention presumed that the increase in OCV through the long-term storage at high temperature can be reduced, and the decrease in DSC pulse discharge characteristic (high rate discharge characteristic) can be reduced when the positive electrode is formed by filling the positive electrode core made of the porous metal member with the positive electrode mixture, and additionally, 1) the average particle size of the iron disulfide as the positive electrode active material is increased, 2) the specific surface area of the conductive agent is increased, and 3) the mixing ratio of the conductive agent in the positive electrode mixture is increased.

To confirm the presumption, lithium primary batteries using the iron disulfide having an average particle size (D₅₀) of 35 µm were fabricated in which the specific surface areas of the conductive agents were varied, and the mixing ratios of the conductive agent in the positive electrode mixture were varied. Then, the continuous discharge characteristic at 100 mA, the DSC pulse discharge characteristic, and the increase in OCV after storage at 60°C of the lithium primary batteries were measured. The characteristics were measured in the same manner as described in connection with Table 1.

Table 2 shows the measurement results of Batteries A1-A6 fabricated by using the conductive agents having different specific surface areas. To fabricate the positive electrode of each battery, a positive electrode mixture was prepared by mixing the iron disulfide having the average particle size (D₅₀) of 35 µm and the conductive agent in a ratio of 95 parts by mass: 5 parts by mass. Then, a positive electrode core made of expanded metal of aluminum was filled with the prepared mixture, and the obtained product was dried and rolled. The conductive agents used had a specific surface area of 14-1300 m²/g as shown in Table 2. As shown in Table 2, different types of the conductive agents suitable for obtaining the predetermined specific surface area were used. The specific surface area was measured by the Brunauer-Emmett-Teller method (BET).

**[Table 2]**

| | Positive electrode core | Conductive agent | | Continuous discharge characteristic at 100 mA | DSC pulse discharge characteristic | Increase in OCV after storage at 60°C (V) |
|---|---|---|---|---|---|---|
| | | Type | BET specific surface area (m²/g) | | | |
| Battery A1 | Expanded metal | Fine graphite | 14 | 100 | 90 | 0.04 |
| Battery A2 | Expanded metal | Acetylene black | 70 | 100 | 92 | 0.03 |
| Battery A3 | Expanded metal | Carbon black | 225 | 100 | 95 | 0.04 |
| Battery A4 | Expanded metal | Carbon black | 300 | 100 | 105 | 0.03 |
| Battery A5 | Expanded metal | Ketchen black | 800 | 101 | 109 | 0.03 |
| Battery A6 | Expanded metal | Ketchen black | 1300 | 101 | 109 | 0.03 |

As shown in Table 2, Batteries A1-A6 showed the increase in OCV after storage at 60°C as low as that of Battery 2 shown in Table 1. This is presumably because of the increased average particle size of the iron disulfide. Batteries A1-A3 using the conductive agents having a specific surface area of 225 m²/g or smaller did not improve in DSC pulse discharge characteristic, while Batteries A4-A6 using the conductive agents having a specific surface area of 300 m²/g or larger improved in DSC pulse discharge characteristic. This is presumably because the increased specific surface area of the conductive agent improved the penetration of the electrolytic solution. The positive electrode mixture containing the conductive agent having a specific surface area of 300 m²/g or larger cannot easily be slurried, and cannot be applied on the surfaces of the positive electrode core.

Table 3 shows the measurement results of Batteries B1-B5 fabricated using the positive electrode mixtures containing the conductive agents (carbon) in different mixing ratios. To fabricate the positive electrode of each battery, a positive electrode mixture was prepared by mixing the iron disulfide having the average particle size (D₅₀) of 35 µm and a conductive agent made of Ketchen black having a specific surface area of 800 m²/g (EC600JD manufactured by Lion Corporation) in a ratio of 95 parts by mass: 5 parts by mass. Then, a positive electrode core made of expanded metal of aluminum was filled with the prepared mixture, and the obtained product was dried and rolled. The mixing ratio between the iron disulfide and the conductive agent (carbon) was 98:2-92:8 as shown in Table 3.

**[Table 3]**

| | Positive electrode core | Mixing ratio in positive electrode mixture | | Continuous discharge characteristic at 100 mA | DSC pulse discharge characteristic | Increase in OCV after storage at 60°C (V) |
|---|---|---|---|---|---|---|
| | | Iron disulfide | carbon | | | |
| Battery B1 | Expanded metal | 98 | 2 | 100 | 90 | 0.04 |
| Battery B2 | Expanded metal | 97 | 3 | 101 | 106 | 0.04 |
| Battery B3 | Expanded metal | 95 | 5 | 101 | 109 | 0.03 |
| Battery B4 | Expanded metal | 93 | 7 | 100 | 108 | 0.03 |
| Battery B5 | Expanded metal | 92 | 8 | 98 | 102 | 0.03 |

As shown in Table 3, Batteries B1-B5 showed the increase in OCV after storage at 60°C as low as that of Battery 2 shown in Table 1. This is presumably because of the increased average particle size of the iron disulfide. Battery B1 in which the mixing ratio between the iron disulfide and the conductive agent (carbon) was 98:2 did not improve in DSC pulse discharge characteristic, while Batteries B2-B5 in which the mixing ratio between the iron disulfide and the conductive agent (carbon) was 97:3-92:8 improved in DSC pulse discharge characteristic. This is presumably because the increased ratio of the conductive agent relative to the iron disulfide in the positive electrode mixture improved the current collecting network in the positive electrode, thereby improving the current collection. Battery B5 in which the mixing ratio between the iron disulfide and the conductive agent (carbon) was 92:8 slightly decreased in continuous discharge characteristic at 100 mA. This is presumably because an absolute amount of the iron disulfide as the positive electrode active material was reduced.

To confirm the effect of the rough pulverization of iron disulfide on the reduction of increase in OCV, lithium primary batteries using different types of iron disulfide having different average particle sizes as the positive electrode active materials were fabricated to measure the continuous discharge characteristic at 100 mA, the DSC pulse discharge characteristic, and the increase in OCV after storage at 60°C of the lithium primary batteries. The measurements were performed in the same manner as described in connection with Table 1.

Table 4 shows the measurement results of Batteries C1-C7 fabricated using the iron disulfide having different average particle sizes. To fabricate the positive electrode of each battery, a positive electrode mixture was prepared by mixing the iron disulfide and the conductive agent made of Ketchen black having a specific surface area of 800 m²/g (EC600JD manufactured by Lion Corporation) in a ratio of 95 parts by mass: 5 parts by mass. Then, a positive electrode core made of expanded metal of aluminum was filled with the prepared mixture, and the obtained product was dried and rolled. The average particle size (D₅₀) of the iron disulfide was 18-55 µm. Regarding Batteries C4-C7, fine powders were removed by dry classification to control a particle size of the iron disulfide at which a cumulative volume fraction of the iron disulfide reached 10% (D₁₀) to 10 µm or smaller.

**[Table 4]**

| | Positive electrode core | Average particle size of iron disulfide | | Continuous discharge characteristic at 100 mA | DSC pulse discharge characteristic | Increase in OCV after storage at 60°C (V) |
|---|---|---|---|---|---|---|
| | | D₅₀ (µm) | D₁₀ (µm) | | | |
| Battery C1 | Expanded metal | 18 | 5 | 100 | 106 | 0.11 |
| Battery C2 | Expanded metal | 20 | 6 | 100 | 106 | 0.04 |
| Battery C3 | Expanded metal | 30 | 7 | 101 | 109 | 0.03 |
| Battery C4 | Expanded metal | 30 | 11 | 101 | 109 | 0.01 |
| Battery C5 | Expanded metal | 40 | 12 | 101 | 110 | 0.01 |
| Battery C6 | Expanded metal | 50 | 12 | 100 | 105 | 0.01 |
| Battery C7 | Expanded metal | 55 | 15 | 100 | 90 | 0.01 |

As shown in Table 4, the increase in OCV after storage at 60°C was reduced by increasing the average particle size (D₅₀) of the iron disulfide to 20 µm or larger (Batteries C2-C7). The increase in OCV after storage at 60°C was further reduced by reducing the particle size at which the cumulative volume fraction of iron disulfide reached 10% (D₁₀) to 10 µm or smaller (Batteries C4-C7). Battery C7 in which the average particle size (D₅₀) was 55 µm decreased in DSC pulse discharge characteristic. This is presumably because the average particle size of the iron disulfide increased too much reduced a reactive area of the iron disulfide, and the high rate discharge characteristic was not easily obtained. Thus, the average particle size (D₅₀) of the iron disulfide is preferably 50 µm or smaller to ensure the high rate discharge characteristic. The average particle size (D₅₀) of the iron disulfide is preferably 30-40 µm to allow easy filling of the positive electrode core made of porous metal member with the positive electrode mixture, and to prevent the falling of the positive electrode mixture off the positive electrode core.

In view of the above studies, the inventors of the present invention have found that the increase in OCV through long-term storage at high temperature can be reduced, and the decrease in DSC pulse discharge characteristic (high rate discharge characteristic) can be reduced when the positive electrode is formed by filling the positive electrode core made of the porous metal member with the positive electrode mixture, and additionally, 1) the average particle size (D₅₀) of the iron disulfide as the positive electrode active material is 20-50 µm, 2) the specific surface area of the conductive agent is 300 m²/g or larger, and 3) the mixing ratio between the iron disulfide and the conductive agent in the positive electrode mixture is 97:3-93:7. Thus, the present invention has been achieved.

FIG. 1 is a half cross-sectional view schematically illustrating a lithium primary battery 10 according to an embodiment of the present invention.

As shown in FIG. 1, an electrode group formed by winding a positive electrode 1 and a negative electrode 2 with a separator 3 interposed therebetween is placed in a case 9 together with a nonaqueous electrolytic solution (not shown). An opening of the case 9 is sealed with a sealing plate 8 connected to a core of the positive electrode 1 through a positive electrode lead 4. The negative electrode 2 is connected to the case 9 through a negative electrode lead 5. Insulators 6, 7 are arranged at upper and lower ends of the electrode group to prevent an internal short circuit.

The positive electrode 1 includes a positive electrode mixture which contains iron disulfide and a conductive agent, and a positive electrode core which is made of a porous metal member, and filled with the positive electrode mixture. An average particle size (D₅₀) of the iron disulfide is 20-50 µm, preferably 30-40 µm. A particle size of the iron disulfide at which a cumulative volume fraction of the iron disulfide reaches 10% (D₁₀) is preferably 10 µm or larger.

The conductive agent has a specific surface area of 300 m²/g or larger, and the iron disulfide and the conductive agent in the positive electrode mixture are preferably mixed in a mass ratio of 97:3-93:7. An upper limit of the specific surface area of the conductive agent is not particularly determined. However, obtaining a conductive agent having a specific surface area higher than 1300 m²/g is substantially difficult and expensive. Thus, the specific surface area is preferably 1300 m²/g or smaller. Materials of the conductive agent are not particularly limited, but Ketchen black is suitably used to obtain the large specific surface area.

Types and materials of the porous metal member are not particularly limited. Examples of the porous metal member include, e.g., expanded metal, foamed metal, sponge metal, steel wool made of long metal fibers, sintered short metal fibers, etc.

The positive electrode 1 includes the porous metal member filled with the positive electrode mixture. However, the positive electrode mixture may be present also on a surface of the porous metal member unless the advantages of the present invention are lost.

The negative electrode 2 may be made of lithium metal or a lithium alloy such as Li-Al etc. Although not particularly limited, the separator 3 may be a microporous polyolefin film etc. A solvent used in the nonaqueous electrolytic solution is not particularly limited as long as it is an organic solvent. For example, γ-butyrolactone, propylene carbonate, ethylene carbonate, etc., may be used. A supporting electrolyte constituting the nonaqueous electrolytic solution may be lithium perchlorate, lithium fluoborate, lithium hexafluorophosphate, lithium trifluoromethanesulfonate, lithium iodide, etc.

As described above, the positive electrode mixture containing the conductive agent having a specific surface area of 300 m²/g or larger used in the present invention cannot easily be slurried, and cannot be applied to a surface of a positive electrode core made of aluminum foil etc. The positive electrode can be formed by filling the positive electrode core made of the porous metal member with the positive electrode mixture. The DSC pulse discharge characteristic (high rate discharge characteristic) can be improved by increasing the ratio of the conductive agent in the positive electrode mixture filling the positive electrode core relative to the iron disulfide. This is because a distance from a skeleton of the porous metal member as the positive electrode core to the iron disulfide is reduced, thereby improving a current collecting network.

For improvement of the current collecting network, a pore size of the porous metal member constituting the positive electrode core was studied.

Table 5 shows the measurement results of the continuous discharge characteristic at 100 mA, the DSC pulse discharge characteristic, and the increase in OCV after storage at 60°C of Batteries D1-D6 fabricated using different types of positive electrode cores made of porous metal members (foamed metal or expanded metal) having different pore sizes. The characteristics were measured in the same manner as described in connection with Table 1.

**[Table 5]**

| | Positive electrode core | | Continuous discharge characteristic at 100 mA | DSC pulse discharge characteristic | Increase in OCV after storage at 60°C (V) |
|---|---|---|---|---|---|
| | Type | Pore size (mm) | | | |
| Battery D1 | Foamed metal | 0.08 | 92 | 93 | 0.03 |
| Battery D2 | Foamed metal | 0.1 | 100 | 107 | 0.03 |
| Battery D3 | Foamed metal | 0.5 | 101 | 109 | 0.03 |
| Battery D4 | Expanded metal | 1.3 | 101 | 108 | 0.04 |
| Battery D5 | Expanded metal | 2.0 | 100 | 107 | 0.03 |
| Battery D6 | Expanded metal | 2.5 | 98 | 89 | 0.04 |

To fabricate the positive electrode of each battery, a positive electrode mixture was prepared by mixing the iron disulfide having the average particle size (D₅₀) of 35 µm and the conductive agent made of Ketchen black having the specific surface area of 800 m²/g (EC600JD manufactured by Lion Corporation) in a ratio of 95 parts by mass: 5 parts by mass.

Then, the positive electrode core having a pore size of 0.08-2.5 mm was filled with the prepared mixture, and the obtained product was dried and rolled. The "pore size" described in the present specification is a diameter of a circle having a circumference equal to an inner circumference of a pore (a single closed region) formed in the porous metal member. When the inner circumferences of the pores are not uniform, the pore size is calculated from an average value of ten optionally selected pores.

As shown in Table 5, Batteries D2-D5 in which the pore size was 0.1-2.0 mm improved in DSC pulse discharge characteristic, and the current collecting network was sufficiently ensured. Battery D6 in which the pore size was 2.5 mm was reduced not only in DSC pulse discharge characteristic, but also in continuous discharge characteristic at 100 mA. This is presumably because the pore size was too large to ensure the current collection from the iron disulfide away from the skeleton of the core.

Battery D1 in which the pore size was 0.08 mm was also reduced in continuous discharge characteristic at 100 mA and DSC pulse discharge characteristic. This is presumably because the pore size was too small, and the porous metal member was not filled with a predetermined amount of the positive electrode mixture.

In view of the improvement of the current collecting network, the pore size of the porous metal member constituting the positive electrode core is preferably 0.1-2.0 mm.

The iron disulfide particles expand in volume during the discharge. Thus, the penetration of the electrolytic solution into the positive electrode may be reduced, or the iron disulfide particles may fall in a last stage of the discharge. To reduce such disadvantages, porosity of the positive electrode was studied.

Table 6 shows the measurement results of the continuous discharge characteristic at 100 mA, the DSC pulse discharge characteristic, and the increase in OCV after storage at 60°C of Batteries E1-E6 fabricated by using the positive electrodes having different porosities.

The characteristics were measured in the same manner as described in connection with Table 1.

**[Table 6]**

| | Positive electrode core | Porosity of positive electrode (%) | Continuous discharge characteristic at 100 mA | DSC pulse discharge characteristic | Increase in OCV after storage at 60°C (V) |
|---|---|---|---|---|---|
| Battery E1 | Expanded metal | 20 | 101 | 98 | 0.04 |
| Battery E2 | Expanded metal | 23 | 101 | 101 | 0.04 |
| Battery E3 | Expanded metal | 25 | 101 | 109 | 0.03 |
| Battery E4 | Expanded metal | 30 | 101 | 108 | 0.03 |
| Battery E5 | Expanded metal | 35 | 101 | 109 | 0.03 |
| Battery E6 | Expanded metal | 38 | 100 | 103 | 0.03 |

To fabricate the positive electrode of each battery, a positive electrode mixture was prepared by mixing the iron disulfide having the average particle size (D₅₀) of 35 µm and the conductive agent made of Ketchen black having the specific surface area of 800 m²/g (EC600JD manufactured by Lion Corporation) in a ratio of 95 parts by mass: 5 parts by mass, and the positive electrode core was filled with the prepared mixture. The obtained products were rolled in different conditions to form the positive electrodes having the porosity of 20-38%. The "porosity" in the present specification designates a ratio (%) of a volume of the pores in the positive electrode relative to a total volume of the positive electrode including the porous metal member when the positive electrode is in an initial state which is not discharged, or merely pre-discharged. The total volume of the positive electrode (V₁) is a value actually measured using a vernier caliper etc. The volume (V₂) of the positive electrode mixture is calculated based on a measured mass of the positive electrode mixture (M), and a density (ρ) of the mixture obtained by a specific gravity indicator (V₂=M/ρ). The volume of the pores (V₃) is obtained by subtracting the volume of the porous metal member (V₄: an actually measured value) and the volume of the positive electrode mixture (V₂) from the total volume of the positive electrode (V₁).

As shown in Table 6, Batteries E3-E5 in which the porosity of the positive electrode was 25-35% improved in DSC pulse discharge characteristic. Batteries E1-E2 in which the porosity of the positive electrode was less than 25% was reduced in DSC pulse discharge characteristic. This is presumably because the penetration of the electrolytic solution into the positive electrode in the last stage of the discharge was reduced when the porosity was too low, and the high rate discharge characteristic was not ensured. Battery E6 in which the porosity of the positive electrode was higher than 35% was reduced in DSC pulse discharge characteristic. This is presumably because current collection between the positive electrode core and the iron disulfide was not easily obtained, and an absolute amount of the positive electrode mixture held in the positive electrode was reduced.

For the above reasons, the porosity of the positive electrode is preferably 25-35% to alleviate the reduction in penetration of the electrolytic solution into the positive electrode in the last stage of the discharge.

The roughly pulverized iron disulfide is used as the positive electrode active material of the present invention. Thus, the positive electrode mixture filling the positive electrode core made of the porous metal member may possibly fall off the positive electrode core. Thus, a binder added to the positive electrode mixture to prevent the falling of the positive electrode mixture was studied.

Table 7 shows the measurement results of the continuous discharge characteristic at 100 mA, the DSC pulse discharge characteristic, and the increase in OCV after storage at 60°C of Batteries F1-F8 fabricated by using the positive electrode mixtures to which different types of binders were added in different ratios. The characteristics were measured in the same manner as described in connection with Table 1.

**[Table 7]**

| | Positive electrode core | Binder | | Continuous discharge characteristic at 100 mA | DSC pulse discharge characteristic | Increase in OCV after storage at 60°C (V) |
|---|---|---|---|---|---|---|
| | | Type | Ratio (%) | | | |
| Battery F1 | Expanded metal | PTFE | 1 | 100 | 97 | 0.04 |
| Battery F2 | Expanded metal | PTFE | 2 | 101 | 108 | 0.03 |
| Battery F3 | Expanded metal | PTFE | 4 | 101 | 108 | 0.03 |
| Battery F4 | Expanded metal | PTFE | 7 | 101 | 107 | 0.03 |
| Battery F5 | Expanded metal | PTFE | 8 | 100 | 99 | 0.03 |
| Battery F6 | Expanded metal | SBR | 4 | 100 | 98 | 0.04 |
| Battery F7 | Expanded metal | Polyethylene | 4 | 100 | 100 | 0.03 |
| Battery F8 | Expanded metal | PVA | 4 | 100 | 95 | 0.04 |

To fabricate the positive electrode of each battery, the positive electrode mixture was prepared by mixing the iron disulfide having the average particle size (D₅₀) of 35 µm and the conductive agent made of Ketchen black having the specific surface area of 800 m²/g (EC600JD manufactured by Lion Corporation) in a ratio of 95 parts by mass: 5 parts by mass. Then, the positive electrode core was filled with the prepared mixture, and the obtained product was dried and rolled.

As shown in Table 7, among Batteries F1-F5 using polytetrafluoroethylene (PTFE) as the binder, Batteries F2-F4 in which the binder was added in a ratio of 2-7% by mass improved in continuous discharge characteristic at 100 mA and DSC pulse discharge characteristic. Battery F1 in which the binder was added in a ratio of 1% by mass was reduced in DSC pulse discharge characteristic. This is presumably because binding capacity of the positive electrode mixture to the positive electrode core was reduced when the amount of the binder added was too small, and the positive electrode mixture fell off the positive electrode core as the discharge continued. Battery F5 in which the binder was added in a ratio of 8% by mass was reduced in DSC pulse discharge characteristic. This is presumably because the excessive amount of the binder inhibited the discharge reaction.

Batteries F6-F8 using styrene butadiene rubber (SBR), polyethylene, or polyvinyl alcohol (PVA) as the binder was reduced in DSC pulse discharge characteristic although the binder was added in a ratio of 4% by mass. This is presumably because PTFE is chemically stable against reduced pH (acidic) of water used as a dispersion medium in preparing the positive electrode mixture containing the iron disulfide, and an organic electrolytic solution, while the binders except for FTFE (SBR, polyethylene, PVA) do not have such stability. Thus, highly stable discharge was not ensured.

When a dispersion of PTFE fine particles is added to the positive electrode mixture, PTFE is fibrillated through the rolling step in fabricating the positive electrode, and is caught on iron disulfide and carbon, thereby providing the binding capacity. Thus, addition of a small amount of PTFE can prevent the falling of the positive electrode mixture. Therefore, to prevent the falling of the positive electrode mixture, the positive electrode mixture preferably contains 2-7% by mass of a binder containing PTFE as a main ingredient relative to the positive electrode mixture.

Types and materials of the porous metal member used as the positive electrode core in the present invention were studied, although they are not particularly limited as described above.

Table 8 shows the measurement results of the continuous discharge characteristic at 100 mA, the DSC pulse discharge characteristic, and the increase in OCV after storage at 60°C of Batteries G1-G4 fabricated by using different types of the positive electrode cores. The characteristics were measured in the same manner as described in connection with Table 1.

**[Table 8]**

| | Positive electrode core | | Continuous discharge characteristic at 100 mA | DSC pulse discharge characteristic | Increase in OCV after storage at 60°C (V) |
|---|---|---|---|---|---|
| | Type | Pore size (mm) | | | |
| Battery G1 | Foamed metal | 0.5 | 100 | 110 | 0.03 |
| Battery G2 | Expanded metal | 1.5 | 101 | 109 | 0.03 |
| Battery G3 | Steel wool | 1.2 | 100 | 108 | 0.04 |
| Battery G4 | Sintered short metal fibers | 0.4 | 101 | 109 | 0.04 |

To fabricate the positive electrode of each battery, a positive electrode mixture was prepared by mixing the iron disulfide having an average particle size (D₅₀) of 35 µm and the conductive agent made of Ketchen black having the specific surface area of 800 m²/g (EC600JD manufactured by Lion Corporation) in a ratio of 95 parts by mass: 5 parts by mass, and adding 5% mass of a binder made of PTFE. The positive electrode core was filled with the prepared mixture, and the obtained product was dried and rolled.

As shown in Table 8, irrespective of the types of the porous metal members, the continuous discharge characteristic at 100 mA and the DSC pulse discharge characteristic were both improved.

The present invention has been described above by way of the preferred embodiment. However, the above-description does not limit the present invention, and various modifications can be made to the present invention.

For example, in the above-described embodiment, Ketchen black or carbon black has been used as the conductive agent having a specific surface area of 300 m²/g or larger. However, the conductive agent is not limited thereto, and carbon nanotubes, carbon nanofibers, etc. can be used. A conductive material containing the conductive agent having the specific surface area of 300 m²/g or larger (carbon powder) as a main ingredient (50% or higher), and optionally containing additional carbon powder may also be used.

In the above-described embodiment, PTFE has been used alone as the binder. However, a binder containing PTFE as a main ingredient (50% or higher), and optionally containing an additional binder may be used in a ratio of 2-7% by mass relative to the total mass of the positive electrode mixture.

In the above-described embodiment, the AA cylindrical batteries have been described as an example. However, the present invention is not limited thereto, and can be applied to cylindrical batteries of other sizes, rectangular batteries, button-shaped batteries, coin-shaped batteries, etc.

### INDUSTRIAL APPLICABILITY

The present invention is useful as 1.5 V grade primary batteries used in digital still cameras etc.

### DESCRIPTION OF REFERENCE CHARACTERS

1 Positive electrode
2 Negative electrode
3 Separator
4 Positive electrode lead
5 Negative electrode lead
6, 7 Insulator
8 Sealing plate
9 Case
10 Lithium primary battery

## Claims

1. A lithium primary battery comprising:
a positive electrode using iron disulfide as a positive electrode active material, wherein
the positive electrode includes a positive electrode mixture containing the positive electrode active material and a conductive agent, and a positive electrode core which is made of a porous metal member, and is filled with the positive electrode mixture,
the iron disulfide has an average particle size of 20-50 µm,
the conductive agent has a specific surface area of 300 m²/g or larger, and
the iron disulfide and the conductive agent in the positive electrode mixture are mixed in a mass ratio of 97:3-93:7.

2. The lithium primary battery of claim 1, wherein
the porous metal member has a pore size of 0.1-2.0 mm.

3. The lithium primary battery of claim 1, wherein
the average particle size of the iron disulfide is 30-40 µm.

4. The lithium primary battery of claim 1, wherein
a particle size of the iron disulfide at which a cumulative volume fraction of the iron disulfide reaches 10% is 10 µm or larger.

5. The lithium primary battery of claim 1, wherein
the specific surface area of the conductive agent is 1300 m²/g or smaller.

6. The lithium primary battery of claim 1, wherein
the conductive agent is made of Ketchen black.

7. The lithium primary battery of claim 1, wherein
the positive electrode has a porosity of 25-35%.

8. The lithium primary battery of claim 1, wherein
the positive electrode mixture contains 2-7% by mass of a binder containing polytetrafluoroethylene (PTFE) as a main ingredient relative to the positive electrode mixture.

9. The lithium primary battery of claim 1, wherein
the porous metal member is made of expanded metal.
